# EUROPÄISCHE PATENTSCHRIFT

(11) **EP 1 990 135 B1**
(45) Veröffentlichungstag und Bekanntmachung des Hinweises auf die Patenterteilung: **04.11.2009**
(21) Anmeldenummer: 07009472.7
(22) Anmeldetag: 11.05.2007
(51) Int. Cl.: B25B 1/18, B25B 1/24, B25B 5/16, B23Q 11/00

(54) **Werkstückspannvorrichtung**
Work piece clamping device
Dispositif de serrage de pièce

(43) Veröffentlichungstag der Anmeldung: 12.11.2008
(73) Patentinhaber: Homag Holzbearbeitungssysteme AG, 72296 Schopfloch (DE)
(72) Erfinder: Sturm, Gotthilf, 72293 Glatten (DE); Gauß, Achim, 72280 Dornstetten/Hallwangen (DE)
(74) Vertreter: HOFFMANN EITLE

(56) Entgegenhaltungen:
- EP-A1- 0 528 286
- EP-A1- 1 277 547
- EP-A1- 1 344 599
- DE-A1- 10 317 341
- DE-A1- 19 845 576
- DE-U1- 9 313 787
- DE-U1- 20 108 188
- GB-A- 2 041 262
- JP-A- 54 017 580
- JP-A- 54 023 276
- JP-A- 57 163 035
- US-A- 4 583 631

## Beschreibung

### Technisches Gebiet

Die Erfindung betrifft eine Werkstückspannvorrichtung zum Spannen von Werkstücken nach dem Oberbegriff von Anspruch 1 sowie ein Verfahren zum Spannen von Werkstücken unter Einsatz einer solchen Werkstückspannvorrichtung. Eine solche Spannvorrichtung ist aus der JP 54 017 580 A bekannt.

### Stand der Technik

Bei der Bearbeitung von Werkstücken, wie beispielsweise der spanenden Bearbeitung von Holz, Holzwerkstoffen, Kunststoff oder dergleichen, müssen die Werkstücke innerhalb einer Bearbeitungsmaschine sicher gespannt werden. Zu diesem Zweck sind unterschiedlichste Werkstückspannvorrichtungen bekannt.

Werkstücke wie Leisten für Fensterrahmen oder dergleichen müssen meist von mehreren Seiten bearbeitet werden, so dass sich ein Ablegen derartiger Werkstücke auf einem Spanntisch oft nicht anbietet. Statt dessen kommen in solchen Fällen meist Werkstückspannvorrichtungen zum Einsatz, die ein erstes Spannelement mit einer ersten Spannfläche und ein zweites Spannelement einer zweiten Spannfläche besitzen, wobei die erste und die zweite Spannfläche einander zugewandt sind. Derartige Werkstückspannvorrichtungen sind beispielsweise in der DE 201 08 188 U1 und der DE 100 30 865 A1 offenbart.

Bei spanenden Bearbeitungsvorgängen fallen in großen Mengen Späne an, die zu einer Verschmutzung sowohl der Werkstückspannvorrichtungen als auch der Werkstücke führen. Falls derartige Späne beim Spannen eines Werkstücks zwischen einer Spannfläche und einer Werkstückoberfläche vorhanden sind, kann dies zu einer Beschädigung der Werkstückoberfläche führen.

Um dies zu vermeiden, ist es üblich, entsprechende Bearbeitungsmaschinen mit einer Abblaseinrichtung mit Abblasdüsen auszustatten. Die Abblasdüsen können beispielsweise an einem Portal einer Bearbeitungsmaschine angeordnet sein und mit diesem verfahren werden, um die Werkstücke und Spannvorrichtungen zu reinigen. Dies führt jedoch zu erheblichen Nebenzeiten, in denen weder Bearbeitung noch Spannvorgänge möglich sind.

Ferner wurde versucht, Abblasdüsen direkt seitlich an Werkstückspannvorrichtungen anzubringen. Dies führt jedoch zu einer aufwändigen Konstruktion, während die Reinigungseffizienz begrenzt bleibt. Insbesondere hat sich gezeigt, dass Werkstückoberflächen sich nur wirksam reinigen lassen, wenn sie sich in einem eng begrenzten Entfernungsbereich zu den Abblasdüsen befinden, und dass sich die Spannflächen generell nicht zufrieden stellend reinigen lassen.

### Darstellung der Erfindung

Es ist Aufgabe der vorliegenden Erfindung, eine Werkstückspannvorrichtung der eingangs genannten Art bereitzustellen, die eine wirksame und zügige Reinigung einer Werkstückoberfläche sowie einer Spannfläche bei einfacher Konstruktion ermöglicht.

Diese Aufgabe wird erfindungsgemäß durch eine Werkstückspannvorrichtung nach Anspruch 1 gelöst. Besonders vorteilhafte Weiterbildungen der Erfindung sind in den abhängigen Ansprüchen angegeben.

In den Patentveröffentlichungen JP 54 017 580 A und JP 54 023 276 ist eine Spannvorrichtung mit einem ersten und zweiten Spannelement offenbart, wobei die zweite Spannvorrichtung unbeweglich ist. In dieser zweiten Spannvorrichtung ist eine Abblaseinrichutng mit einer einzelnen Abblasöffnung vorgesehen, die im Bereich der Auflagefläche zur Reinigung verwendet werden kann, aber auch dazu dient, den Aufprall des Werkstücks auf die zweite Spannfläche mit Hilfe von Druckluft durch die Abblasöffnung abzumindern.

Der Erfindung liegt die Erkenntnis zugrunde, dass ein seitliches Anbringen von Abblasdüsen an Werkstückspannvorrichtungen eine geneigte Anordnung der Abblasdüsen mit sich bringt. Diese geneigte Anordnung führt zu der begrenzten Effizienz der bekannten Abblasdüsen, da sie - in dem zwischen den Spannflächen definierten Raum - nur in einem eng begrenzten Entfernungsbereich zu den Abblasdüsen eine ausreichende Wirkung entfalten.

Vor diesem Hintergrund ist erfindungsgemäß vorgesehen, dass die Abblaseinrichtung mindestens eine Abblasöffnung aufweist, die zumindest in der ersten Spannfläche angeordnet ist. Auf diese Weise kann ein Abblasen besonders wirksam und direkt erfolgen, wobei die mindestens eine Abblasdüse praktisch den gesamten zwischen den Spannflächen definierten Raum abdecken kann. Hierdurch lassen sich zu spannende Werkstückoberflächen und Spannflächen weitgehend unabhängig von ihrer Entfernung zur jeweiligen Abblasöffnung effizient reinigen. Gleichzeitig wird eine einfache Konstruktion ermöglicht, und der Reinigungsvorgang kann mit geringen Nebenzeiten erfolgen. Darüber hinaus lassen sich durch die integrierte Anordnung der mindestens einen Abblasöffnung mögliche Kollisionen der Abblaseinrichtung mit anderen Maschinenteilen wie insbesondere Bearbeitungswerkzeugen vermeiden.

Gemäß einer Weiterbildung der Erfindung ist vorgesehen, dass die Werkstückspannvorrichtung einen zweiten Spannmechanismus zum Verfahren des zweiten Spannelements mit einer Bewegungskomponente in einer Richtung senkrecht zur zweiten Spannfläche besitzt, wobei der zweite Spannmechanismus einen verschiebbar angeordneten zweiten Spannkolben aufweist, der über eine zweite Kolbenstange mit dem zweiten Spannelement verbunden ist. Auf diese Weise eignet sich die Werkstückspannvorrichtung besonders gut für die Übergabe von Werkstücken zwischen derartigen Werkstückspannvorrichtungen, bei der ein Werkstück üblicherweise in einer ersten Werkstückspannvorrichtung festgehalten ist und eine zweite Werkstückspannvorrichtung auf das Werkstück aufgeschoben wird. Da das Werkstück hierbei unverschieblich ist, würde das zweite Spannelement mit dem Werkstück kollidieren oder an diesem entlangkratzen, sodass die gesamte Werkstückspannvorrichtung aus der Ebene verfahren werden müsste. Dies wird durch die erfindungsgemäße Weiterbildung vermieden, da lediglich das zweite Spannelement selbst (gegebenenfalls um einen geringen Hub) verfahren werden kann, was Übergabevorgänge von Werkstücken deutlich erleichtert.

Gemäß einer Weiterbildung der Erfindung ist ferner vorgesehen, dass die Ablasseinrichtung mindestens eine Druckluftleitung aufweist, die mit der mindestens einen Ablassöffnung in Verbindung steht und zumindest abschnittsweise innerhalb der Werkstückspannvorrichtung verläuft. Auf diese Weise sind an der erfindungsgemäßen Werkstückspannvorrichtung keine externen Schläuche vorgesehen, sodass keine Gefahr besteht, dass derartige Schläuche mit anderen Maschinenteilen, insbesondere Bearbeitungswerkzeugen kollidieren. Dabei ist es besonders bevorzugt, dass die mindestens eine Druckluftleitung zumindest abschnittsweise durch die erste und/oder zweite Kolbenstange verläuft. Hierdurch ergibt sich eine besonders kompakte Bauweise mit wenigen Bauteilen, da die jeweilige Kolbenstange eine Doppelfunktion erfüllt und zumindest abschnittsweise kein separates Bauteil für die Druckluftleitung erforderlich ist.

Um eine Werkstückspannvorrichtung mit besonders kompakten Abmessungen, insbesondere einer besonders geringen Bauhöhe bereitzustellen, ist gemäß einer Weiterbildung der Erfindung vorgesehen, dass der erste und der zweite Spannkolben bei Betrachtung senkrecht zur ersten Spannfläche einander zumindest abschnittsweise überlappen und bevorzugt konzentrisch angeordnet sind. Durch eine derartige "beschränkte" Bauweise kann auch die Anzahl der Vorteile reduziert werden.

Darüber hinaus ist gemäß einer Weiterbildung der Erfindung vorgesehen, dass die Werkstückspannvorrichtung eine erste und/oder eine zweite Führungseinrichtung zum Führen der Hubbewegung des ersten bzw. zweiten Spannkolbens aufweist. Hierdurch wird auch bei einer flachen Bauweise des jeweiligen Spannkolbens mit entsprechend kompakter Bauweise der gesamten Werkstückspannvorrichtung eine sichere und verschleißarme Hubbewegung des jeweiligen Spannkolbens ermöglicht und eine Verdrehung des jeweiligen Kolbens um seine Achse verhindert.

Gemäß einer Weiterbildung der Erfindung ist ferner vorgesehen, dass der erste Spannkolben an einen ersten Zylinderraum angrenzt und der zweite Spannkolben an einen zweiten Zylinderraum angrenzt, wobei der erste und der zweite Zylinderraum in Fluidverbindung miteinander stehen. Auf diese Weise lässt sich einerseits die Anzahl der Druckfluidanschlüsse vermindern und somit die Konstruktion der Werkstückspannvorrichtung vereinfachen, und andererseits lässt sich auch die Steuerung des Betriebes der Werkstückspannvorrichtung einfacher ausgestalten. Dabei ist es im Hinblick auf eine besonders einfache Konstruktion mit wenigen Bauteilen besonders bevorzugt, dass der erste und der zweite Zylinderraum über die erste Führungseinrichtung miteinander in Fluidverbindung stehen.

Ferner ist gemäß einer Weiterbildung der Erfindung vorgesehen, dass der erste und der zweite Spannkolben an einen gemeinsamen Zylinderraum angrenzen, der zwischen dem ersten und dem zweiten Spannkolben gelegen ist. Auch diese Ausgestaltung besitzt mehrere Vorteile. Zum einen ermöglicht der gemeinsame Zylinderraum einen leichten Druckausgleich bei einer Hubbewegung der Spannkolben, beispielsweise im Zuge eines Spannvorgangs sowie auch ein leichtes Auseinanderfahren der Spannkolben bzw. der zugehörigen Spannelemente unter Einsatz eines einzigen Druckfluidanschlusses, wodurch sich wiederum eine einfache Konstruktion und eine leichte Steuerbarkeit ergeben.

Ein besonders vorteilhaftes Verfahren zum Spannen von Werkstücken unter Einsatz der erfindungsgemäßen Werkstückspannvorrichtung ist Gegenstand von Anspruch 9. Dieses zeichnet sich dadurch aus, dass das Abblasen einer Oberfläche eines zu spannenden Werkstücks nicht nur vor Beginn eines Spannvorganges, sondern zumindest teilweise auch während eines Spannvorganges abgeblasen wird, im Zuge dessen das erste und/oder das zweite Spannelement derart verfahren wird, um das Werkstück zu spannen. Auf diese Weise ergibt sich eine besonders wirksame Reinigung der Werkstückoberfläche mit entsprechend verminderter Gefahr von Beschädigungen derselben. Dabei ist es besonders bevorzugt, dass vor dem Einführen des Werkstücks zwischen die erste und die zweite Spannfläche mindestens eine der Spannflächen mittels der Abblaseinrichtung abgeblasen wird, um das Risiko von Verschmutzungen und Beschädigungen der Werkstückoberfläche weiter zu minimieren.

### Kurze Beschreibung der Zeichnungen

Fig. 1 zeigt schematisch zwei Seitenansichten und eine Draufsicht einer Werkstückspannvorrichtung als bevorzugte Ausführungsform der vorliegenden Erfindung;
Fig. 2 zeigt schematisch eine Schnittansicht der in Fig. 1 gezeigten Werkstückspannvorrichtung, wobei der Schnitt entlang der Linie A-A in Fig. 1 geführt ist;
Fig. 3 schematisch eine Schnittansicht der in Fig. 1 gezeigten Werkstückspannvorrichtung, wobei der Schnitt entlang der Linie B-B in Fig. 1 geführt ist.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

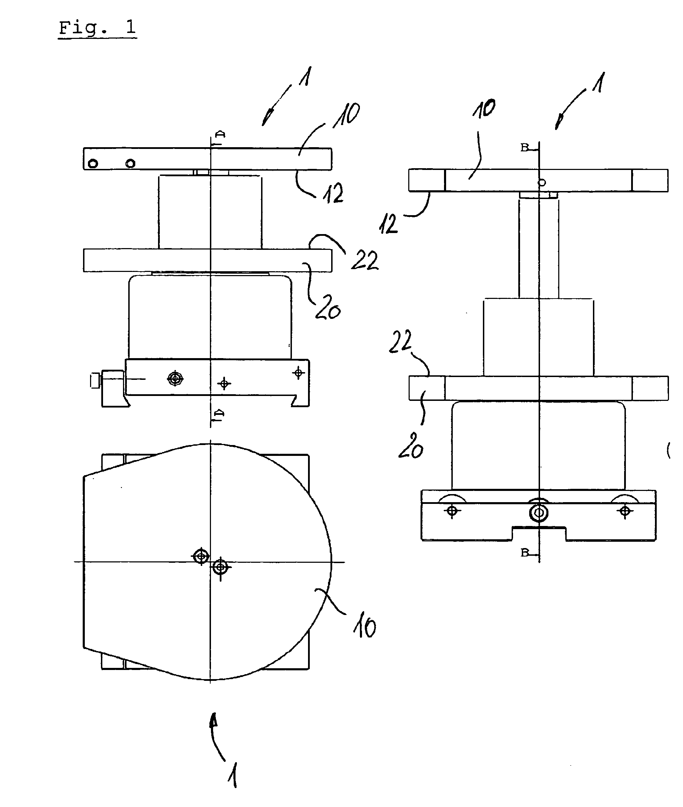

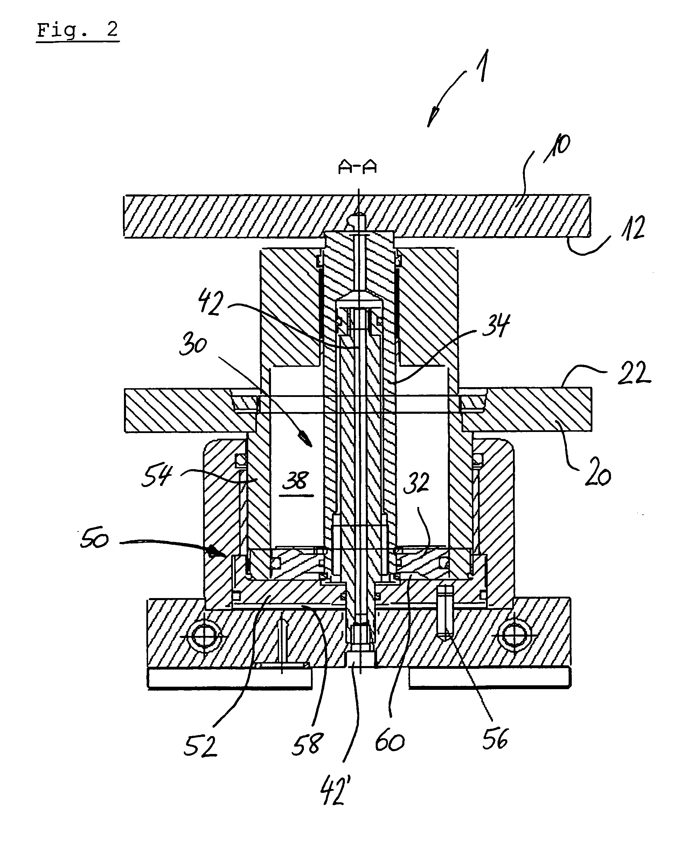

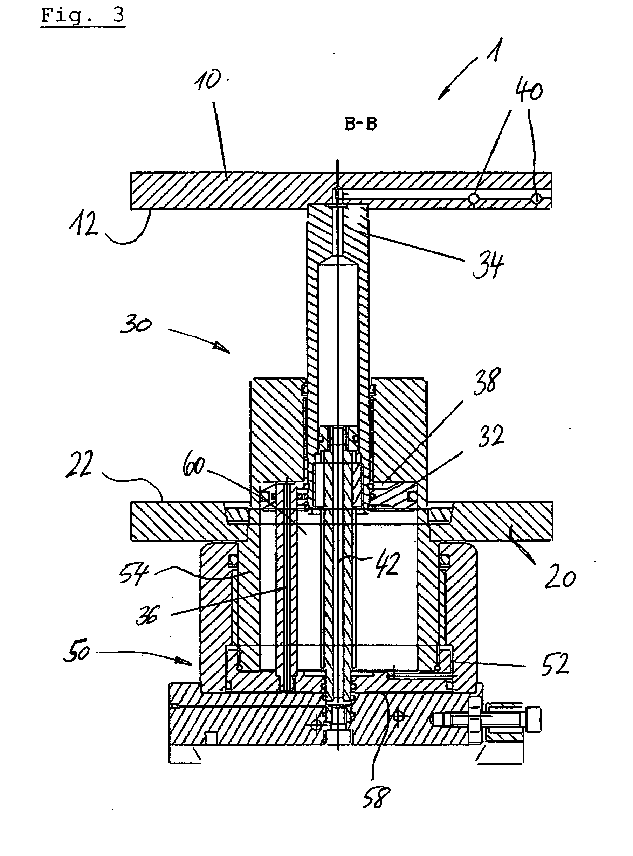

Eine Werkstückspannvorrichtung 1 als bevorzugte Ausführungsform der vorliegenden Erfindung ist in Fig. 1, Fig. 2 und Fig. 3 schematisch in verschiedenen Ansichten gezeigt. Obgleich die Werkstückspannvorrichtung 1 als einzelne Vorrichtung dargestellt ist, wird diese häufig Teil einer Gesamtvorrichtung sein, wie beispielsweise einer Bearbeitungsmaschine zum bevorzugt spanenden Bearbeiten von Werkstücken. Dabei zeigt Fig. 3 die Werkstückspannvorrichtung in einer vollständig auseinander gefahrenen Stellung der Spannelemente 10, 20, während Fig. 2 die Werkstückspannvorrichtung in einer vollständig zusammen gefahrenen Stellung der Spannelemente 10, 20 zeigt. Obgleich die Art der Werkstücke im Rahmen der vorliegenden Erfindung nicht beschränkt ist, eignet sich die erfindungsgemäße Spannvorrichtung besonders gut für Werkstücke, die zumindest teilweise aus Holz, Holzwerkstoffen, Kunststoff oder dergleichen bestehen, wie sie beispielsweise im Bereich der Möbelindustrie häufig bearbeitet werden müssen.

Die Werkstückspannvorrichtung 1 besitzt ein erstes Spannelement 10 und ein zweites Spannelement 20, die jeweils nach Art einer "Spannpratze" ausgebildet sind und eine erste bzw. zweite Spannfläche 12, 22 aufweisen. Wie in Fig. 2 und Fig. 3 am besten zu erkennen ist, ist zum Verfahren des ersten Spannelements 10 in einer Richtung senkrecht zur ersten Spannfläche 12 ein erster Spannmechanismus 30 vorgesehen, der einen verschiebbar angeordneten ersten Spannkolben 32 aufweist, welcher über eine erste Kolbenstange 34 mit dem ersten Spannelement 10 verbunden ist. In ähnlicher Weise ist zum Verfahren des zweiten Spannelements 20 in einer Richtung senkrecht zu einer Spannfläche 22 ein zweiter Spannmechanismus 20 vorgesehen, der einen verschiebbar angeordneten zweiten Spannkolben 52 aufweist, welcher über eine zweite Kolbenstange 54 (die von ihren Abmessungen her eher wie ein Zylinder aufgebaut ist und auch als Zylinder für den ersten Kolben 32 dient) mit dem zweiten Spannelement 20 verbunden ist.

Durch die erste Kolbenstange 34 hindurch, und so auch durch die zweite Kolbenstange 54 hindurch, erstreckt sich eine Druckluftleitung 42, die sich in dem ersten Spannelement 10 fortsetzt und schließlich in Abblasöffnungen 40 mündet, die in der ersten Spannfläche 12 angeordnet sind. Obgleich somit in der vorliegenden Ausführungsform Abblasöffnungen 40 nur in der ersten Spannfläche 12 gezeigt sind, ist zu beachten, dass im Rahmen der vorliegenden Erfindung zusätzlich Abblasöffnungen 40 in der zweiten Spannfläche 22 angeordnet sein können.

An seinem gegenüberliegenden Ende mündet die Druckluftleitung 42 in einen Druckluftanschluss 42', der an eine geeignete Druckluftquelle anschließbar ist.

Wie in Fig. 2 und Fig. 3 zu erkennen ist, sind der erste und der zweite Spannkolben konzentrisch zueinander angeordnet und besitzen jeweils eine Führungseinrichtung 36 bzw. 56 zum Führen der Hubbewegung des jeweiligen Spannkolbens 32, 52. dabei sind die Führungseinrichtungen 36, 56 in der vorliegenden Ausführungsform als stabförmige Bauteile ausgebildet, die den jeweiligen Spannkolben 32, 52 in Hubrichtung durchdringen bzw. in Hubrichtung in diesen eingreifen. Dabei ist die erste Führungseinrichtung 36 hohl ausgeformt, sodass über die erste Führungseinrichtung 32 eine Fluidverbindung zwischen einem an den ersten Spannkolben 32 angrenzenden ersten Zylinderraum 38 und einen an den zweiten Spannkolben 52 angrenzenden zweiten Zylinderraum 58 hergestellt werden kann.

Dabei steht der zweite Zylinderraum 58 mit einem nicht näher gezeigten Druckfluidanschluss in Verbindung, über den beide Zylinderräume 38, 58 mit Druckfluid versorgt werden können.

Ferner ist zwischen dem ersten Spannkolben 32 und dem zweiten Spannkolben 52 ein gemeinsamer Zylinderraum 60 definiert, an den beide Spannkolben 32, 52 angrenzen. Dieser Zylinderraum steht mit einem nicht näher gezeigten Druckfluidanschluss in Verbindung.

Der Betrieb der erfindungsgemäßen Werkstückspannvorrichtung wird nachfolgend beispielhaft für den Fall einer Übergabe eines Werkstücks zwischen zwei gleichartigen und auf einem gemeinsamen Höhenniveau montierten Werkstückspannvorrichtungen 1 beschrieben. Während ein zu bearbeitendes Werkstück, beispielsweise ein Fensterrahmenteil, in einer ersten Werkstückspannvorrichtung 1 gespannt ist, wird eine zweite Werkstückspannvorrichtung 1 zur Übernahme des Werkstücks vorbereitet. Zu diesem Zweck wird zunächst die Spannfläche 22 des unteren, zweiten Spannelements 20 gereinigt, indem Druckluft über die Druckluftleitung 42 zu den Abblasöffnungen 40 zugeführt wird. Dies kann prinzipiell in jeder beliebigen Stellung des oberen ersten und des unteren zweiten Spannelements 10, 20 erfolgen, wobei im Hinblick auf eine gute Reinigungswirkung ein Abblasen in dem in Fig. 2 gezeigten, geschlossenen Zustand des ersten und des zweiten Spannelements 10, 20 vorgenommen wird. In letzterem Zustand sind die Zylinderräume 38 und 58 mit Druck beaufschlagt.

Anschließend wird der Druck in den Zylinderräumen 38, 58 abgelassen. Darüber hinaus wird je nach Werkstückdicke der gemeinsame Zylinderraum 60 mit Druck beaufschlagt, sodass sich das erste Spannelement 10 anhebt und sich der zweite Spannkolben 52 in seine unterste Hubposition absenkt.

Nun wird diese zweite Werkstückspannvorrichtung über das in der ersten Werkstückspannvorrichtung gehaltene Werkstück in eine gewünschte Sollposition geschoben. Anschließend kann mit dem Abblasen der Oberseite des Werkstücks über die Abblasöffnungen 40 des ersten Spannelements 10 begonnen werden, und das erste Spannelement 10 kann durch Ablassen des Drucks in dem gemeinsamen Zylinderraum 60 und Zuführen von Druckluft zu dem ersten Zylinderraum 38 abgesenkt werden, während weiterhin Druckluft aus den Abblasöffnungen 40 zur Reinigung der Werkstückoberfläche ausgestoßen wird.

Simultan hierzu wird Druckfluid zu dem ersten und dem zweiten Zylinderraum 38, 58 zugeführt, sodass sich das untere Spannelement 20 ebenfalls auf das Werkstück zu bewegt und das Werkstück schließlich durch das erste und das zweite Spannelement 10, 20 gespannt wird. Sobald ein ausreichender Fluiddruck in dem ersten und dem zweiten Zylinderraum 38, 58 aufgebaut wurde, kann die vorherige Werkstückspannvorrichtung von dem Werkstück durch Zuführen von Druckluft zu dessen gemeinsamen Zylinderraum 60 getrennt werden, und die gewünschte Bearbeitung des Werkstücks kann begonnen werden.

## Patentansprüche

1. Werkstückspannvorrichtung (1) zum Spannen von Werkstücken zumindest während einer Bearbeitung der Werkstücke, umfassend:
ein erstes oberes Spannelement (10) mit einer ersten Spannfläche (12) und ein zweites unteres Spannelement (20) mit einer zweiten Spannfläche (22), wobei die erste (12) und die zweite (22) Spannfläche einander zugewandt sind,
einen ersten Spannmechanismus (30) zum Verfahren des ersten Spannelements (10) mit einer Bewegungskomponente in einer Richtung senkrecht zur ersten Spannfläche, wobei der erste Spannmechanismus einen verschiebbar angeordneten ersten Spannkolben (32) aufweist, der über eine erste Kolbenstange (34) mit dem ersten Spannelement (10) verbunden ist, und
eine Abblaseinrichtung zum Abblasen einer Spannfläche (12, 22) und/oder einer Oberfläche eines zu spannenden Werkstücks, wobei die Abblaseinrichtung mindestens eine Abblasöffnung (40) aufweist
**dadurch gekennzeichnet, dass**
eine Abblasöffnung zumindest in der ersten oberen Spannfläche (12) angeordnet ist.

2. Werkstückspannvorrichtung nach Anspruch 1, **dadurch gekennzeichnet, dass** sie einen zweiten Spannmechanismus (50) zum Verfahren des zweiten Spannelements (20) mit einer Bewegungskomponente in einer Richtung senkrecht zur zweiten Spannfläche (22) besitzt, wobei der zweite Spannmechanismus (50) einen verschiebbar angeordneten zweiten Spannkolben (52) aufweist, der über eine zweite Kolbenstange (54) mit dem zweiten Spannelement (20) verbunden ist.

3. Werkstückspannvorrichtung nach Anspruch 1 oder 2, **dadurch gekennzeichnet, dass** die Abblaseinrichtung mindestens eine Druckluftleitung (42) aufweist, die mit der mindestens einen Abblasöffnung (40) in Verbindung steht und zumindest abschnittsweise innerhalb der Werkstückspannvorrichtung (1), insbesondere zumindest abschnittsweise durch die erste (34) und/oder zweite (54) Kolbenstange verläuft.

4. Werkstückspannvorrichtung nach einem der vorhergehenden Ansprüche, **dadurch gekennzeichnet, dass** der erste (32) und der zweite (52) Spannkolben bei Betrachtung senkrecht zur ersten Spannfläche einander zumindest abschnittsweise überlappen und bevorzugt konzentrisch angeordnet sind.

5. Werkstückspannvorrichtung nach einem der vorhergehenden Ansprüche, **dadurch gekennzeichnet, dass** die ferner eine erste (36) und/oder zweite (56) Führungseinrichtung zum Führen der Hubbewegung des ersten (32) bzw. zweiten (52) Spannkolbens aufweist.

6. Werkstückspannvorrichtung nach einem der vorhergehenden Ansprüche, **dadurch gekennzeichnet, dass** der erste Spannkolben (32) an einen ersten Zylinderraum (38) angrenzt und der zweite Spannkolben (52) an einen zweiten Zylinderraum (58) angrenzt, wobei der erste und der zweite Zylinderraum (38, 58) in Fluidverbindung miteinander stehen, und zwar bevorzugt über die erste Führungseinrichtung (36).

7. Werkstückspannvorrichtung nach Anspruch 6, **dadurch gekennzeichnet, dass** der erste (38) und der zweite (58) Zylinderraum mit einer einzigen, gemeinsamen Druckfluidquelle in Verbindung bringbar sind.

8. Werkstückspannvorrichtung nach Anspruch 6 oder 7, **dadurch gekennzeichnet, dass** der erste (32) und der zweite (52) Spannkolben an einen gemeinsamen Zylinderraum (60) angrenzen, der zwischen dem ersten (32) und dem zweiten (52) Spannkolben gelegen ist.

9. Verfahren zum Spannen von Werkstücken unter Einsatz einer Werkstückspannvorrichtung (1) nach einem der vorhergehenden Ansprüche, mit den Schritten:
Bereitstellen eines zu spannenden Werkstücks (2),
Bringen des ersten (10) und des zweiten (20) Spannelements in eine geöffnete Stellung, in welcher das Werkstück zwischen die erste (12) und die zweite (22) Spannfläche eingeführt werden kann,
Einführen des Werkstücks zwischen die erste (12) und die zweite (22) Spannfläche,
Abblasen einer Oberfläche des Werkstücks mittels der Abblaseinrichtung während zumindest teilweise simultan das erste (10) und/oder zweite (20) Spannelement derart verfahren wird, um das Werkstück (2) zu spannen.

10. Verfahren nach Anspruch 9, **dadurch gekennzeichnet, dass** vor dem Einführen des Werkstücks zwischen die erste (12) und die zweite (22) Spannfläche mindestens eine der Spannflächen (12, 22) mittels der Abblaseinrichtung abgeblasen wird.

## Claims

1. Work piece clamping device (1) for clamping work pieces at least during machining of the work pieces, comprising:
a first upper clamping element (10) having a first clamping surface (12) and a second lower clamping element (20) having a second clamping surface (22), the first (12) and second (22) clamping surfaces facing towards each other,
a first clamping mechanism (30) for moving the first clamping element (10) with a movement component in a direction perpendicularly to the first clamping surface, the first clamping mechanism having a slidably mounted first clamping piston (32) which is connected by a first piston rod (34) to the first clamping element (10), and
a blowing device for blowing a clamping surface (12, 22) and/or a surface of a work piece to be clamped, the blowing device having at least one blowing opening (40),
**characterised in that**
a blowing opening is arranged at least in the first upper clamping surface (12).

2. Work piece clamping device according to claim 1, **characterised in that** it has a second clamping mechanism (50) for moving the second clamping element (20) with a movement component in a direction perpendicularly to the second clamping surface (22), the second clamping mechanism (50) having a slidably mounted second clamping piston (52) which is connected by a second piston rod (54) to the second clamping element (20).

3. Work piece clamping device according to claim 1 or 2, **characterised in that** the blowing device has at least one compressed air pipe (42) which is connected to the at least one blowing opening (40) and runs at least in one section within the work piece clamping device (1), in particular at least in one section through the first (34) and/or second (54) piston rod.

4. Work piece clamping device according to any of the preceding claims, **characterised in that** the first (32) and second (52) clamping pistons when viewed perpendicularly to the first clamping surface overlap each other at least in one section and are preferably arranged concentrically.

5. Work piece clamping device according to any of the preceding claims, **characterised in that** it further has first (36) and/or second (56) guide devices for guiding the reciprocating movement of the first (32) and/or second (52) clamping pistons.

6. Work piece clamping device according to any of the preceding claims, **characterised in that** the first clamping piston (32) adjoins a first cylinder chamber (38) and the second clamping piston (52) adjoins a second cylinder chamber (58), the first and second cylinder chambers (38, 58) being in fluid communication with each other, preferably via the first guide device (36).

7. Work piece clamping device according to claim 6, **characterised in that** the first (38) and second (58) cylinder chambers can be connected to a single, common compressed fluid source.

8. Work piece clamping device according to claim 6 or 7, **characterised in that** the first (32) and second (52) clamping pistons adjoin a common cylinder chamber (60) which is located between the first (32) and second (52) clamping pistons.

9. Method for clamping work pieces using a work piece clamping device (1) according to any of the preceding claims, with the steps of:
providing a work piece (2) to be clamped,
moving the first (10) and second (20) clamping elements into an open position in which the work piece can be introduced between the first (12) and second (22) clamping surfaces,
introducing the work piece between the first (12) and second (22) clamping surfaces,
blowing a surface of the work piece by means of the blowing device while at least partly simultaneously the first (10) and/or second (20) clamping element is moved in such a way as to clamp the work piece (2).

10. Method according to claim 9, **characterised in that**, before introducing the work piece between the first (12) and second (22) clamping surfaces, at least one of the clamping surfaces (12, 22) is blown by means of the blowing device.

## Revendications

1. Dispositif de serrage de pièce (1) servant à serrer des pièces au moins pendant un usinage des pièces, comprenant :
un premier élément de serrage supérieur (10) avec une première surface de serrage (12) et un deuxième élément de serrage inférieur (20) avec une deuxième surface de serrage (22), la première (12) et la deuxième (22) surface de serrage étant tournées l'une vers l'autre,
un premier mécanisme de serrage (30) servant à déplacer le premier élément de serrage (10) avec une composante de déplacement dans une direction perpendiculaire à la première surface de serrage, le premier mécanisme de serrage présentant un premier piston de serrage (32) agencé de manière mobile, qui est relié au premier élément de serrage (10) par le biais d'une première tige de piston (34), et
un dispositif de soufflage, servant à souffler sur une surface de serrage (12, 22) et/ou une surface d'une pièce à serrer, le dispositif de soufflage présentant au moins une ouverture de soufflage (40),
**caractérisé en ce que**
une ouverture de soufflage est agencée au moins dans la première surface de serrage supérieure (12).

2. Dispositif de serrage de pièce selon la revendication 1, **caractérisé en ce qu'**il possède un deuxième mécanisme de serrage (50) servant à déplacer le deuxième élément de serrage (20) avec une composante de déplacement dans une direction perpendiculaire à la deuxième surface de serrage (22), le deuxième mécanisme de serrage (50) présentant un deuxième piston de serrage (52) agencé de manière mobile, qui est relié au deuxième élément de serrage (20) par le biais d'une deuxième tige de piston (54).

3. Dispositif de serrage de pièce selon la revendication 1 ou 2, **caractérisé en ce que** le dispositif de soufflage présente au moins une conduite d'air comprimé (42), qui est en relation avec l'au moins une ouverture de soufflage (40) et s'étend au moins par section à l'intérieur du dispositif de serrage de pièce (1), en particulier au moins par section par la première (34) et/ou deuxième (54) tige de piston.

4. Dispositif de serrage de pièce selon l'une quelconque des revendications précédentes, **caractérisé en ce que** le premier (32) et le deuxième (52) piston de serrage, vus perpendiculairement à la première surface de serrage, se chevauchent l'un l'autre au moins par section et sont agencés de préférence de manière concentrique.

5. Dispositif de serrage de pièce selon l'une quelconque des revendications précédentes, **caractérisé en ce qu'**il présente en outre un premier (36) et/ou deuxième (56) dispositif de guidage servant à guider la course du premier (32) respectivement deuxième (52) piston de serrage.

6. Dispositif de serrage de pièce selon l'une quelconque des revendications précédentes, **caractérisé en ce que** le premier piston de serrage (32) est adjacent à une première chambre de cylindre (38) et le deuxième piston de serrage (52) est adjacent à une deuxième chambre de cylindre (58), la première et la deuxième chambre de cylindre (38, 58) étant en relation fluidique l'une avec l'autre et ce de préférence par le biais du premier dispositif de guidage (36).

7. Dispositif de serrage de pièce selon la revendication 6, **caractérisé en ce que** la première (38) et la deuxième (58) chambre de cylindre peuvent être mises en relation avec une seule source de fluide sous pression commune.

8. Dispositif de serrage de pièce selon la revendication 6 ou 7, **caractérisé en ce que** le premier (32) et le deuxième (52) piston de serrage sont adjacents à une chambre de cylindre (60) commune, qui se situe entre le premier (32) et le deuxième (52) piston de serrage.

9. Procédé de serrage de pièces utilisant un dispositif de serrage de pièce (1) selon l'une quelconque des revendications précédentes, comportant les étapes consistant à :
mettre à disposition une pièce à serrer (2),
amener le premier (10) et le deuxième (20) élément de serrage dans une position ouverte, dans laquelle la pièce peut être introduite entre la première (12) et la deuxième (22) surface de serrage,
introduire la pièce entre la première (12) et la deuxième (22) surface de serrage,
souffler sur une surface de la pièce à l'aide du dispositif de soufflage pendant qu'au moins en partie simultanément le premier (10) et/ou deuxième (20) élément de serrage est déplacé de sorte à serrer la pièce (2).

10. Procédé selon la revendication 9, **caractérisé en ce qu'**avant introduction de la pièce entre la première (12) et la deuxième (22) surface de serrage, au moins une des surfaces de serrage (12, 22) est soumise au soufflage à l'aide du dispositif de soufflage.
